# EUROPEAN PATENT APPLICATION

(11) **EP 4 545 388 A1**
(43) Date of publication of application: **30.04.2025**
(21) Application number: 24206978.9
(22) Date of filing: 16.10.2024
(51) Int. Cl.: B62J 35/00, B60K 15/063, B60K 15/07, B62K 11/04, B62K 19/30

(54) **STRADDLE-TYPE VEHICLE**

(30) Priority: 23.10.2023 JP 2023182039
(71) Applicant: Suzuki Motor Corporation, Shizuoka 432-8611 (JP)
(72) Inventor: YAMAMOTO, Takayo, Shizuoka (JP); ODA, Tomoyuki, Shizuoka (JP)
(74) Representative: Haseltine Lake Kempner LLP

(57) **Abstract**

A straddle-type vehicle (1) travels using gas fuel. The straddle-type vehicle is provided with: a vehicle body frame (10) that forms a frame of a vehicle body; and a gas tank (60) inside the vehicle body frame. The vehicle body frame includes: a pair of frame portions (17L, 17R, 22L, 22R) that are located on both sides of the gas tank; and a bridge portion (81) that connects the pair of frame portions at a rear side of the gas tank. A fixing position of one end portion of the bridge portion and one frame portion is lower than a fixing position of the other end portion of the bridge portion and the other frame portion.

## Description

### TECHNICAL FIELD

The present invention relates to a straddle-type vehicle.

### BACKGROUND ART

In recent years, a fuel cell vehicle that travels using electric power generated by a fuel cell has been developed. In a fuel cell vehicle, a hydrogen gas in a hydrogen tank and oxygen in air are chemically reacted in a fuel cell to generate electric power, and the generated electric power is supplied to a motor to drive wheels. In addition to a fuel cell vehicle, a straddle-type vehicle provided with a gas fuel engine is developed, in which a hydrogen gas is used as gas fuel and combusted and the vehicle travels using combustion energy (for example, see Patent Literature 1). In the straddle-type vehicle disclosed in Patent Literature 1, a gas tank is provided below the floor board in front of the engine.

### CITATION LIST

### PATENT LITERATURE

Patent Literature 1: JPH04-283128A

### SUMMARY OF INVENTION

### TECHNICAL PROBLEM

In the straddle-type vehicle as described above, a protective member may be provided in order to protect the gas tank from other components when receiving an impact from the rear side. However, various components are provided at the rear side of the gas tank, and in order to protect the gas tank from these components, the shape of the protective member may become complicated and the size of the vehicle may tend to be increased.

The present invention has been made in view of the above, and an object of the present invention is to provide a straddle-type vehicle capable of appropriately protecting a gas tank from a component at the rear side of the tank.

### SOLUTION TO PROBLEM

In order to solve the above problem, a straddle-type vehicle according to an aspect of the present invention is a straddle-type vehicle for traveling using gas fuel, the straddle-type vehicle including: a vehicle body frame that forms a frame of a vehicle body; and a gas tank inside the vehicle body frame, in which the vehicle body frame includes a pair of frame portions that are located on both sides of the gas tank, and a bridge portion that connects the pair of frame portions at a rear side of the gas tank, and in which a fixing position of one end portion of the bridge portion and one frame portion is lower than a fixing position of the other end portion of the bridge portion and the other frame portion.

### ADVANTAGEOUS EFFECTS OF INVENTION

According to the straddle-type vehicle in the aspect of the present invention, the bridge portion obliquely crosses the rear side of the gas tank such that one end portion of the bridge portion is lower than the other end portion. Even if a plurality of components are arranged at the rear side of the gas tank in the left-right direction or the upper-lower direction, the bridge portion is positioned between the plurality of components and the gas tank. When the components move forward due to an impact or the like from the rear side, the gas tank is protected from the components by the bridge portion. Accordingly, the gas tank and the components are brought close to each other, and the gas tank and the components are compactly provided to reduce the size of the straddle-type vehicle.

### BRIEF DESCRIPTION OF DRAWINGS

FIG. 1 is a left side view of a vehicle internal structure according to the present embodiment.
FIG. 2 is a right side view of the vehicle internal structure according to the present embodiment.
FIG. 3 is a left side view of a vehicle body central portion according to the present embodiment.
FIG. 4 is a top view of the vehicle body central portion according to the present embodiment.
FIG. 5 is a rear view of the vehicle body central portion according to the present embodiment.
IG. 6 is a right side view of the vehicle body central portion according to the present embodiment.

### DESCRIPTION OF EMBODIMENTS

A straddle-type vehicle according to an aspect of the present invention travels using gas fuel. The frame of the vehicle body of the straddle-type vehicle is formed by a vehicle body frame, and a gas tank is provided inside the vehicle body frame. In the vehicle body frame, a pair of frame portions are located on the lateral side of the gas tank, and a bridge portion that connects the pair of frame portions is located at the rear side of the gas tank. The fixing position of one end portion of the bridge portion and one frame portion is lower than the fixing position of the other end portion of the bridge portion and the other frame portion, and the bridge portion obliquely crosses the rear side of the gas tank. Even if a plurality of components are arranged at the rear side of the gas tank in the left-right direction or the upper-lower direction, the bridge portion is positioned between the plurality of components and the gas tank. When the components move forward due to an impact or the like from the rear side, the gas tank is protected from the components by the bridge portion. Accordingly, the gas tank and the components are brought close to each other, and the gas tank and the components are compactly provided to reduce the size of the straddle-type vehicle.

### Embodiment

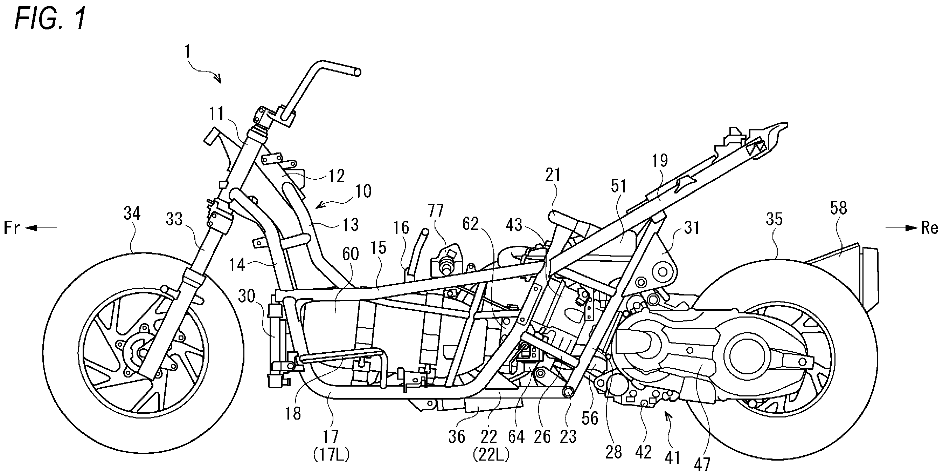

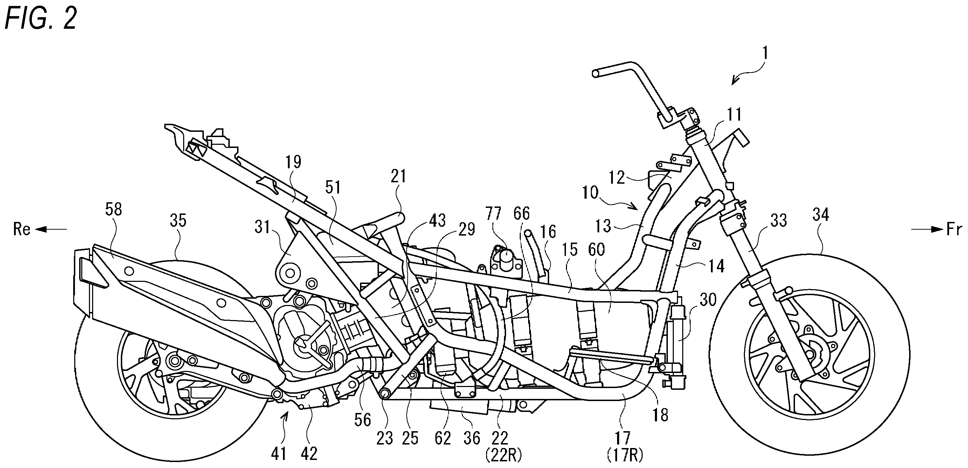

Hereinafter, a straddle-type vehicle according to the present embodiment will be described with reference to the accompanying drawings. FIG. 1 is a left side view of a vehicle internal structure according to the present embodiment. FIG. 2 is a right side view of the vehicle internal structure according to the present embodiment. In the following drawings, an arrow Fr indicates the vehicle front side, an arrow Re indicates the vehicle rear side, an arrow L indicates the vehicle left side, and an arrow R indicates the vehicle right side.

As shown in FIGS. 1 and 2, a straddle-type vehicle 1 is implemented by mounting various covers (not shown), as vehicle body exteriors, on a vehicle body frame 10 forming the frame of the vehicle body. A head pipe 11 is provided at the front end portion of the vehicle body frame 10, and a support frame 12 extends obliquely rearward and downward from the upper portion of the head pipe 11. A pair of first down frames 13 branch to the left and right from the lower portion of the support frame 12 and extend downward, and a pair of second down frames 14 branch to the left and right from the lower portion of the head pipe 11 and extend downward. A pair of main frames 15 are connected to the lower portions of the pair of first down frames 13 and the pair of second down frames 14.

The pair of main frames 15 extend toward the vehicle rear side, and the intermediate portions of the pair of main frames 15 are connected to each other by an upper bridge 16. A pair of left-right asymmetric side frames 17 extend downward from the front ends of the pair of main frames 15. The side frames 17 are bent rearward at the lower portion of the vehicle, and then extend obliquely rearward and upward toward the rear portions of the pair of main frames 15. The front half portion of the vehicle body frame 10 is formed in a cradle shape by the pair of main frames 15 and the pair of side frames 17. A pair of foot boards 18 are attached to the pair of side frames 17.

A pair of seat frames 19 extend rearward from the rear portions of the pair of main frames 15. The facing interval of the pair of seat frames 19 increases toward the middle of the frames, and then decreases toward the rear ends of the frames. The pair of seat frames 19 are formed in an arch shape, and the rear end portions of the pair of seat frames 19 are connected to each other. The front portions of the pair of seat frames 19 are connected to each other by an upper bridge 21. A rear portion of the pair of side frames 17 is connected to the upper bridge 21, and the upper bridge 21 is supported from the lower side by the pair of side frames 17.

A pair of left-right asymmetric lower frames 22 extend rearward from the lower portions of the pair of side frames 17. The rear end portions of the pair of lower frames 22 are connected to each other by a lower bridge 23. A left sub frame 28 extends obliquely rearward and upward from the left end portion of the lower bridge 23, and the seat frame 19 is supported by the left sub frame 28 from below. The right end portion of the lower bridge 23 and the intermediate portion of the right side frame 17 are connected to each other by a side bridge 25. A right sub frame 29 extends obliquely rearward and upward from the intermediate portion of the side bridge 25, and the seat frame 19 is supported by the right sub frame 29 from below.

A front fork 33 is steerably supported on the head pipe 11, and a front wheel 34 is rotatably supported on the lower portion of the front fork 33. A long gas tank 60 is provided inside the cradle portion in the front half portion of the vehicle body frame 10. Gas fuel such as hydrogen is stored in the gas tank 60, and a tank valve 62 at the rear portion of the tank controls inflow and outflow of the gas fuel. The gas fuel is supplied from the tank valve 62 toward an injector (not shown) above a unit swing engine (an engine) 41 via fuel system components such as a plurality of pipes, a regulator 64, and a fuel hose 66.

The unit swing engine 41 is swingably supported on support plates 31 of the left sub frame 28 and the right sub frame 29. The unit swing engine 41 is operated by the combustion energy of the gas fuel supplied from the gas tank 60. The cylinder axis of the unit swing engine 41 is inclined forward to be close to horizontal, and a cylinder assembly 43 extends forward of the vehicle from a crankcase 42. The cylinder assembly 43 enters between the left sub frame 28 and the right sub frame 29, and the front end of the cylinder assembly 43 is close to the tank valve 62 of the gas tank 60.

An intake system component such as an air cleaner 51 is connected to the upper portion of the cylinder assembly 43, and an exhaust system component such as an exhaust pipe 56 or a muffler 58 is connected to the lower portion of the cylinder assembly 43. A CVT cover 47 is attached to the left side of the crankcase 42. A rear wheel 35 is rotatably supported on the rear portion of the CVT cover 47. A belt-type continuously variable transmission (not shown) is accommodated inside the CVT cover 47, and the driving force of the unit swing engine 41 is transmitted to the rear wheel 35 via a belt. The unit swing engine 41 is swung together with the muffler 58, the CVT cover 47, and the rear wheel 35.

The straddle-type vehicle 1 is provided with a protective member that protects the gas tank 60 from other components when receiving an impact from the rear side. On the rear side of the gas tank 60, not only a cylinder head cover 46 of the unit swing engine 41 but also a link mechanism 37 for the suspension 36 is provided. Since the link mechanism 37 is located below the cylinder head cover 46, the gas tank 60 cannot be appropriately protected by the protective member that extends only in the left-right direction. Therefore, in the present embodiment, a protection bridge (a bridge portion) 81 serving as a protective member is inclined diagonally in the left-right direction, thereby effectively protecting the gas tank 60 from a plurality of components that are arranged in the upper-lower direction.

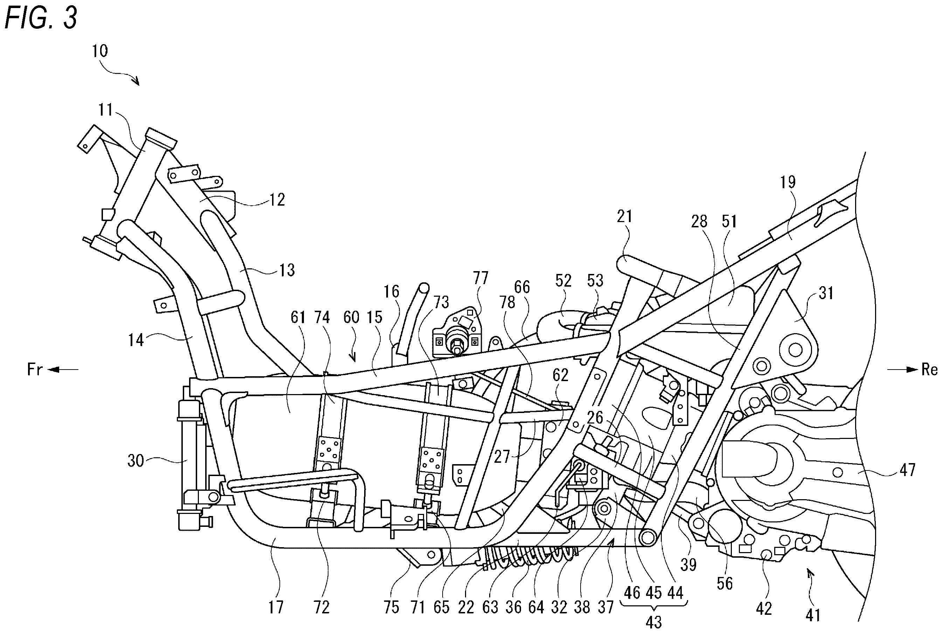

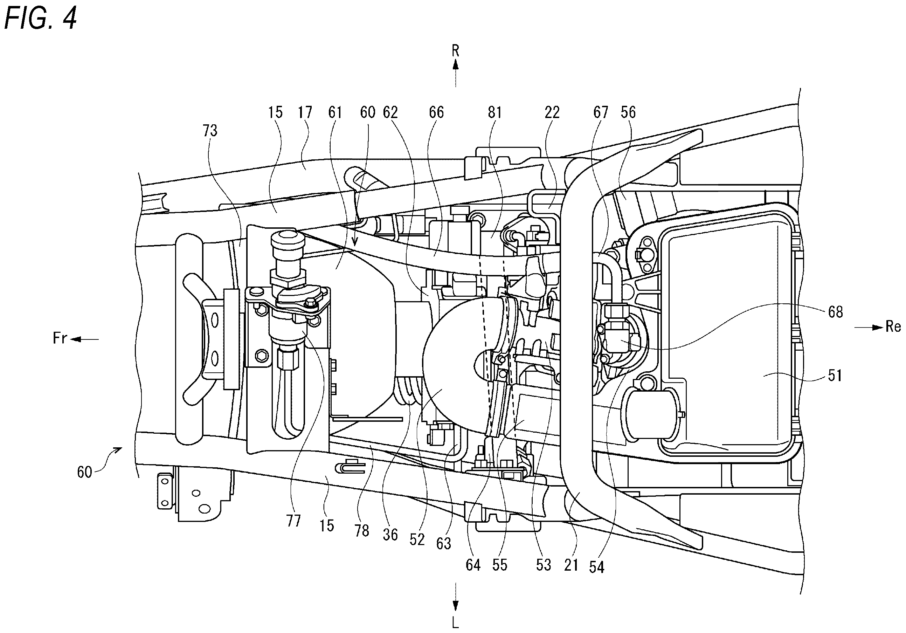

The peripheral structure of the unit swing engine will be described with reference to FIGS. 3 and 4. FIG. 3 is a left side view of a vehicle body central portion according to the present embodiment. FIG. 4 is a top view of the vehicle body central portion according to the present embodiment.

As shown in FIGS. 3 and 4, the cylinder assembly 43 of the unit swing engine 41 is formed by stacking a cylinder 44, a cylinder head 45, and a cylinder head cover 46. An intake device is provided above the cylinder head 45. The intake device includes the air cleaner 51, a U-shaped outlet tube 52, a throttle body 53, and an intake pipe 54. Air is sent from the air cleaner 51 to the throttle body 53 through the outlet tube 52, and the intake amount is adjusted by the throttle body 53, then the air is supplied to the intake port of the cylinder head 45 through the intake pipe 54.

An exhaust port is formed in the lower portion of the cylinder head 45, and the exhaust pipe 56 serving as an exhaust device is connected to the exhaust port. The exhaust pipe 56 is curved rearward from the lower surface of the cylinder head 45 and then extends to the vehicle rear side through the right side of the crankcase 42. The muffler 58 (see FIG. 2) inclined obliquely rearward and upward at the right side of the rear wheel 35 is connected to the rear end portion of the exhaust pipe 56. The exhaust gas flows into the exhaust pipe 56 from the exhaust port of the unit swing engine 41, flows rearward through the exhaust pipe 56, and then is discharged to the outside from the muffler 58.

A link mechanism 37 for the suspension 36 is provided below the cylinder head 45. The link mechanism 37 includes a link lever 38 having an arc shape in the side view, and the intermediate portion of the link lever 38 is swingably coupled to a link bracket 32 of the vehicle body frame 10. The upper end portion of the link lever 38 is swingably coupled to the lower portion of the crankcase 42 via a link arm 39, and the lower end portion of the link lever 38 is coupled to a suspension bracket 75 of the vehicle body frame 10 via the suspension 36. The suspension 36 expands and contracts as the unit swing engine 41 swings, thereby absorbing vibrations transmitted to the vehicle body.

The gas tank 60 is provided in front of the unit swing engine 41. A tank main body 61 of the gas tank 60 is formed in a cylindrical shape, and both end portions of the tank main body 61 bulge in a hemispherical shape. The longitudinal direction of the tank main body 61 is oriented in the front-rear direction, and the front end of the tank main body 61 is slightly inclined to be higher than the rear end. The gas tank 60 is supported on the lower portion of the vehicle body frame 10 via a pair of front tank bracket 71 and rear tank bracket 72. Bands 73 and 74 are attached to the pair of tank brackets 71 and 72, and the outer circumferential surface of the tank main body 61 is fastened by the bands 73 and 74.

The tank valve 62 is provided at the rear end portion of the tank main body 61, and the regulator 64 is connected to a relief valve pipe 63 extending obliquely rearward and upward from the lower portion of the tank valve 62. When the pressure of the gas fuel reaches a predetermined pressure or higher, the valve of the regulator 64 is opened to adjust the pressure of the gas fuel. A fuel filling port 77 is formed above the gas tank 60, and the upper portion of the tank valve 62 is connected to a filling pipe 78 that extends obliquely downward and rearward from the fuel filling port 77. The tank is filled with the gas fuel from the fuel filling port 77 through the tank valve 62. A radiator 30 for engine cooling is provided in front of the gas tank 60.

An injector joint 68 is connected to the regulator 64 via an upstream pipe 65, the fuel hose 66, and a downstream pipe 67. The upstream pipe 65 and the downstream pipe 67 are formed of a hard pipe material such as metal, and the fuel hose 66 is formed of a soft rubber hose. The upstream pipe 65 crosses below the tank valve 62 and extends from the regulator 64 at the vehicle body left side to the vehicle body right side. At the vehicle body right side, the lower end portion of the fuel hose 66 is connected to the upstream pipe 65, and the fuel hose 66 extends upward through the right side of the gas tank 60. The upper end portion of the fuel hose 66 is connected to the injector joint 68 above the cylinder head 45 via the downstream pipe 67.

In this way, the gas fuel is supplied from the tank valve 62 of the gas tank 60 to the unit swing engine 41 through the relief valve pipe 63, the regulator 64, the upstream pipe 65, the fuel hose 66, and the downstream pipe 67. A protection bridge 81 that connects the right lower frame 22 and the left side frame 17 is provided at the rear side of the tank valve 62. The protection bridge 81 extends obliquely so as to avoid the regulator 64 and the link mechanism 37. When the straddle-type vehicle 1 receives an impact from the rear side, the tank valve 62 is protected from the rear side component such as the link mechanism 37 by the protection bridge 81.

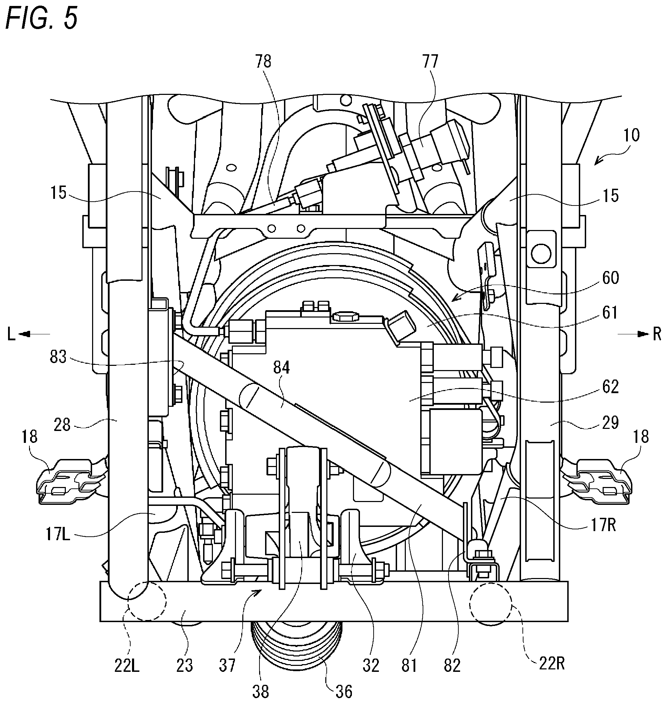

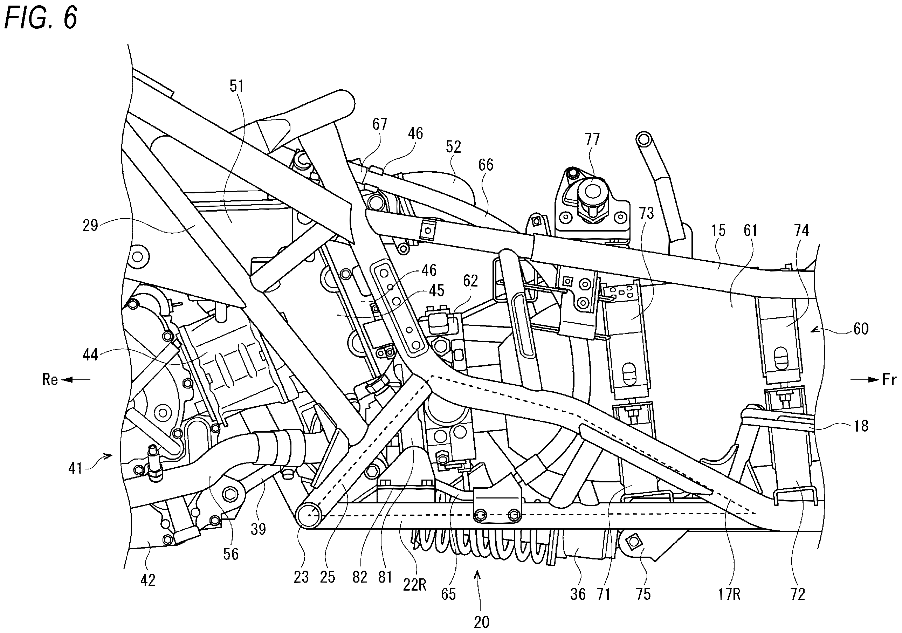

The protection structure of the gas tank will be described with reference to FIGS. 5 and 6. FIG. 5 is a rear view of the vehicle body central portion according to the present embodiment. FIG. 6 is a right side view of the vehicle body central portion according to the present embodiment. FIG. 5 shows a state in which the unit swing engine, the intake device, the exhaust device, and the like are removed. In the following description, the side frame and the lower frame on the left side are denoted by a reference sign L, and the side frame and the lower frame on the right side are denoted by a reference sign R.

As shown in FIG. 5, a pair of frame portions of the vehicle body frame 10 are located on both sides of the gas tank 60, and the pair of frame portions are formed left-right asymmetrically by a pair of side frames 17L and 17R and a pair of lower frames 22L and 22R. The rear side portion of the left side frame 17L rises behind the rear side portion of the right side frame 17R, and the right lower frame 22R is formed longer than the left lower frame 22L in the front-rear direction (see FIGS. 1 and 2). The protection bridge 81 that obliquely crosses the rear side of the gas tank 60 is connected to the pair of frame portions.

More specifically, an L-shaped fixing plate 82 is provided at the right end portion of the protection bridge 81, and a vertical fixing plate 83 is provided at the left end portion of the protection bridge 81. The fixing plate 82 on the right end side of the protection bridge 81 is fixed to the right lower frame 22R, and the fixing plate 82 on the left end side of the protection bridge 81 is fixed to the rising rear side portion of the left side frame 17L. The fixing position of the right end portion of the protection bridge 81 and the right lower frame 22R is lower than the fixing position of the left end portion of the protection bridge 81 and the left side frame 17L. The protection bridge 81 extends obliquely, so that interference between the protection bridge 81 and the regulator 64 (see FIG. 3) is prevented.

The protection bridge 81 is located between the gas tank 60 and the link mechanism 37, and the link mechanism 37 partially overlaps the intermediate position of the protection bridge 81 when viewed from the rear. The link mechanism 37 is provided close to the protection bridge 81 in the front-rear direction, and the gas tank 60 and the link mechanism 37 are compactly provided. The rear surface of the intermediate position of the protection bridge 81 is recessed, and a recess 84 is formed along the extending direction of the protection bridge 81. The recess 84 of the protection bridge 81 is positioned in front of the link mechanism 37. Accordingly, even if the link lever 38 of the link mechanism 37 swings, the interference between the protection bridge 81 and the link lever 38 is prevented.

In addition to the link mechanism 37, the cylinder head cover 46 (see FIG. 6) is also located at the rear side of the protection bridge 81, and the protection bridge 81 overlaps the link mechanism 37 and the cylinder head cover 46 when viewed from the rear. Therefore, even when the link mechanism 37 and the cylinder head cover 46 move forward due to an impact or the like from the rear side, the link mechanism 37 and the cylinder head cover 46 are received by the protection bridge 81, and the gas tank 60 is protected. Accordingly, the gas tank 60, the link mechanism 37, and the unit swing engine 41 can be compactly provided in the vehicle body frame 10, thereby reducing the size of the straddle-type vehicle 1.

As shown in FIG. 6, a triangular frame 20 is formed on the right (one) frame portion of the vehicle body frame 10 by a lower side portion that extends in the front-rear direction, a front oblique side portion that extends obliquely upward and rearward from the front end of the lower side portion, and a rear oblique side portion that extends obliquely upward and forward from the rear end of the lower side portion. The lower side portion of the triangular frame 20 is formed by the right lower frame 22R, the front oblique side portion of the triangular frame 20 is formed by the right side frame 17R, and the rear oblique side portion of the triangular frame 20 is formed by the right side bridge 25. The fixing plate 82 on the right end side of the protection bridge 81 is fixed to the lower frame 22R serving as the lower side portion of the triangular frame 20.

The triangular frame 20 has high rigidity, and the triangular frame 20 is less likely to be deformed even when receiving an impact or the like from the rear side. The protection bridge 81 is fixed to the triangular frame 20, so that displacement of the fixing position on the right end side of the protection bridge 81 is prevented. In particular, the protection bridge 81 is fixed to the lower frame 22R that has high rigidity in the front-rear direction. Accordingly, even if an impact or the like is received from the rear side, the displacement of the fixing position on the right end side of the protection bridge 81 is effectively prevented. Therefore, the gas tank 60 is protected from the rear components such as the link mechanism 37 and the cylinder head cover 46 by the protection bridge 81.

As shown in FIG. 3, the side frame 17L and the left sub frame 28 are connected to the left (the other) frame portion of the vehicle body frame 10 by a side bridge 26, and the side frame 17L and the main frame 15 are connected to each other by a side bridge 27. By the side bridges 26 and 27, the rigidity of the side frame 17L is increased, and the side frame 17L is less likely to be deformed. The protection bridge 81 is fixed to the side frame 17L, so that the displacement of the fixing position on the left end side of the protection bridge 81 is prevented even when an impact from the rear side is received, and the gas tank 60 is protected from various rear components by the protection bridge 81.

As described above, according to the straddle-type vehicle 1 in the present embodiment, the protection bridge 81 obliquely crosses the rear side of the gas tank 60 such that the right end portion of the protection bridge 81 is lower than the left end portion. Even if the link mechanism 37 and the cylinder head cover 46 are arranged at the rear side of the gas tank 60 in the upper-lower direction, the protection bridge 81 is positioned between the link mechanism 37 and the cylinder head cover 46 and the gas tank 60. When the link mechanism 37 and the like move forward due to an impact or the like from the rear side, the gas tank 60 is protected from the link mechanism 37 and the like by the protection bridge 81. Accordingly, the gas tank 60, the link mechanism 37, and the like are brought close to each other, and the gas tank 60, the link mechanism 37, and the like are compactly provided to reduce the size of the straddle-type vehicle 1.

In the present embodiment, the triangular frame is formed on one frame portion of the vehicle body frame, but the frame shape of the vehicle body frame is not particularly limited. For example, the triangular frame may be formed on the other frame portion, or the triangular frame may be formed on both the left and right frame portions. The location where the protection bridge is fixed to the triangular frame is not particularly limited.

Although it is not necessary for the triangular frame to be formed on both the left and right frame portions, it is preferable that the lower portion of the one frame portion is formed by the lower frame and one end portion of the protection bridge is fixed to this lower frame.

In the present embodiment, the fixing position of the right end portion of the protection bridge is lower than the fixing position of the left end portion of the protection bridge. Alternatively, the fixing position of the right end portion of the protection bridge may be higher than the fixing position of the left end portion of the protection bridge. For example, the right end portion of the protection bridge may be fixed to the rear side portion of the right side frame, and the left end portion of the protection bridge may be fixed to the left lower frame.

In the present embodiment, the link mechanism and the cylinder head cover are positioned at the rear side of the protection bridge, but the components at the rear side of the protection bridge are not particularly limited. Another component such as a regulator may be positioned at the rear side of the protection bridge.

The unit swing engine is exemplified as an engine in the present embodiment. However, the engine is not limited to the unit swing engine as long as the engine is operated by the combustion energy of the gas fuel.

The engine is a hydrogen engine using hydrogen gas in the present embodiment. Alternatively, the engine may be other gas fuel engines using other gas fuel such as a methane gas and a propane gas.

A single gas tank is provided in the straddle-type vehicle in the present embodiment. Alternatively, a plurality of gas tanks may be provided in the straddle-type vehicle.

Both end portions of the gas tank are formed in a cylindrical shape bulging in a hemispherical shape in the present embodiment. However, the shape of the gas tank is not limited as long as the gas tank has a shape capable of storing the gas fuel.

Further, the protection bridge according to the present embodiment is not limited to being used in the above-described straddle-type vehicle, and may be used in other types of straddle-type vehicles. The straddle-type vehicle is not limited to a general vehicle in which the driver rides on the seat in a posture of straddling the seat, and includes a scooter-type vehicle in which the driver rides on the seat without straddling the seat.

As described above, a first aspect provides a straddle-type vehicle (1) for traveling using gas fuel, the straddle-type vehicle including: a vehicle body frame (10) that forms a frame of a vehicle body; and a gas tank (60) inside the vehicle body frame, in which the vehicle body frame includes a pair of frame portions (side frames 17L and 17R, and lower frames 22L and 22R) that are located on both sides of the gas tank, and a bridge portion (a protection bridge 81) that connects the pair of frame portions at a rear side of the gas tank, and in which a fixing position of one end portion of the bridge portion and one frame portion is lower than a fixing position of the other end portion of the bridge portion and the other frame portion. According to this configuration, the bridge portion obliquely crosses the rear side of the gas tank such that one end portion of the bridge portion is lower than the other end portion. Even if a plurality of components are arranged at the rear side of the gas tank in the left-right direction or the upper-lower direction, the bridge portion is positioned between the plurality of components and the gas tank. When the components move forward due to an impact or the like from the rear side, the gas tank is protected from the components by the bridge portion. Accordingly, the gas tank and the components are brought close to each other, and the gas tank and the components are compactly provided to reduce the size of the straddle-type vehicle.

A second aspect is directed to the first aspect, in which a lower portion of the one frame portion is formed by a lower side portion that extends in a front-rear direction, and in which the one end portion of the bridge portion is fixed to the lower side portion of the one frame portion. According to this configuration, since the bridge portion is fixed to the lower side portion of the frame portion that has high rigidity in the front-rear direction, the lower side portion is less likely to be deformed due to an impact or the like from the rear side, and the displacement of the fixing position of the one end portion of the bridge portion can be prevented.

A third aspect is directed to the first aspect, in which a triangular frame (20) is formed on the one frame portion by a lower side portion (a lower frame 22R) that extends in a front-rear direction, a front oblique side portion (a side frame 17R) that extends obliquely upward and rearward from a front end of the lower side portion, and a rear oblique side portion (a side bridge 25) that extends obliquely upward and forward from a rear end of the lower side portion, and in which the one end portion of the bridge portion is fixed to the triangular frame. According to this configuration, since the bridge portion is fixed to the triangular frame that has high rigidity, the triangular frame is less likely to be deformed due to an impact from the rear side, and the displacement of the fixing position of the one end portion of the bridge portion can be prevented.

A fourth aspect is directed to the third aspect, in which the one end portion of the bridge portion is fixed to the lower side portion of the one frame portion. According to this configuration, since the bridge portion is fixed to the lower side portion of the frame portion that has high rigidity in the front-rear direction, the lower side portion is less likely to be deformed due to an impact or the like from the rear side, and the displacement of the fixing position of the one end portion of the bridge portion can be prevented.

The straddle-type vehicle according to a fifth aspect directed to any one of the first to fourth aspects, further including a suspension (36) configured to absorb vibration of the vehicle body, and a link mechanism (37) for the suspension, in which the link mechanism is located at a rear side of the gas tank, and in which the bridge portion is located between the gas tank and the link mechanism. According to this configuration, even when the link mechanism moves forward due to an impact from the rear side, the gas tank is protected from the link mechanism by the bridge portion. Accordingly, the gas tank and the link mechanism can be compactly provided, and the size of the straddle-type vehicle can be reduced.

Although the present embodiment has been described, a part or all of the above-described embodiment and modifications may be combined as another embodiment.

The technique according to the present disclosure is not limited to the above-described embodiment, and may be variously changed, replaced, or modified without departing from the gist of the technical concept. Further, the present invention may be implemented by other methods as long as the technical concept can be implemented by the methods through advance of the technique or other derivative techniques. Therefore, the claims cover all embodiments that may fall within the scope of the technical concept.

### REFERENCE SIGNS LIST

1: straddle-type vehicle
10: vehicle body frame
17: side frame (frame portion)
17R: side frame (front oblique side portion)
20: triangular frame
22: lower frame (frame portion)
22R: lower frame (lower side portion)
25: side bridge (rear oblique side portion)
36: suspension
37: link mechanism
60: gas tank
81: protection bridge (bridge portion)

## Claims

1. A straddle-type vehicle (1) for traveling using gas fuel, the straddle-type vehicle comprising:
a vehicle body frame (10) that forms a frame of a vehicle body; and
a gas tank (60) inside the vehicle body frame,
wherein the vehicle body frame includes: a pair of frame portions (17L, 17R, 22L, 22R) that are located on both sides of the gas tank; and a bridge portion (81) that connects the pair of frame portions at a rear side of the gas tank, and
wherein a fixing position of one end portion of the bridge portion and one frame portion is lower than a fixing position of the other end portion of the bridge portion and the other frame portion.

2. The straddle-type vehicle according to claim 1,
wherein a lower portion of the one frame portion is formed by a lower side portion that extends in a front-rear direction, and
wherein the one end portion of the bridge portion is fixed to the lower side portion of the one frame portion.

3. The straddle-type vehicle according to claim 1,
wherein a triangular frame is formed on the one frame portion by a lower side portion that extends in a front-rear direction, a front oblique side portion that extends obliquely upward and rearward from a front end of the lower side portion, and a rear oblique side portion that extends obliquely upward and forward from a rear end of the lower side portion, and
wherein the one end portion of the bridge portion is fixed to the triangular frame.

4. The straddle-type vehicle according to claim 3,
wherein the one end portion of the bridge portion is fixed to the lower side portion of the one frame portion.

5. The straddle-type vehicle according to claim 1 or 2, further comprising
a suspension configured to absorb vibration of the vehicle body, and
a link mechanism for the suspension,
wherein the link mechanism is located at a rear side of the gas tank, and
wherein the bridge portion is located between the gas tank and the link mechanism.
